# EUROPEAN PATENT SPECIFICATION

(11) **EP 1 670 806 B1**
(45) Date of publication and mention of the grant of the patent: **06.01.2010**
(21) Application number: 04769194.4
(22) Date of filing: 27.08.2004
(51) Int. Cl.: C07F 7/18

(54) **PROCESS FOR PREPARATION OF ESTERS OF 2-DIAZO-3-TRIMETHYLSILYLOXY-3-BUTENOIC ACID**
VERFAHREN ZUR HERSTELLUNG VON ESTERN VON 2-DIAZO-3-TRIMETHYLSILYLOXY-3-BUTENSÄURE
PROCEDE POUR LA PREPARATION D'ESTERS D'ACIDE 2-DIAZO-3-TRIMETHYLSILYLOXY-3 BUTENOIQUE

(30) Priority: 28.08.2003 WO PCT/IN02/00003
(43) Date of publication of application: 21.06.2006
(73) Proprietor: Ranbaxy Laboratories Limited, Haryana 122001, Delhi (IN)
(72) Inventor: KUMAR, Yatendra, Gurgaon, Haryana 122001 (IN); TEWARI, Neera, Gurgaon, Haryana 122001 (IN); RAI, Bishwa, Prakash, Azamgarh, Uttar Pradesh 276306 (IN)
(74) Representative: Cronin, Brian Harold John
(86) International application number: PCT/IB2004/002777
(87) International publication number: WO 2005/021560

(56) References cited:
- EP-A- 0 409 331
- EP-A- 0 414 904

## Description

### Technical Field of the Invention

The present invention relates to a process for the preparation of esters of 2-diazo-3-trimethylsilyloxy-3-butenoic acid, which are useful intermediates for the synthesis of thienamycin, imipenem and other carbapenem antibiotic compounds.

### Background of the Invention

2-diazo-3-trimethylsilyloxy-3-butenoic acid esters, which are prepared by silylation of diazoacetoacetate with trimethylsilylchloride and hexamethyldisilazane, have been disclosed. EP 414904 B1 and EP 409331 A2 disclose the preparation of 2-diazo-3-trisubstituted silyloxy-3-butenoate ester comprising silylating substituted diazoacetoacetate with trisubstituted silyl halide in the presence of a base and alkali metal halide. In addition, U.S. Patent No. 4,683,296 discloses the preparation of 2-diazo-3-trisubstituted silyloxy-3-butenoate ester comprising reacting substituted diazoacetoacetate with silyl triflate in an inert solvent and in the presence of an organic base.
It has been observed that large quantity of byproducts, such as insoluble salts of alkali metal halide are formed during the reaction, which further interfere with the subsequent reactions. Therefore, removal of such byproducts is required.
Accordingly, there remains a need for a process for preparing such esters while avoiding the formation of byproducts, such as insoluble alkali metal halide salts.

### Summary of the Invention

The present invention encompasses a process for the preparation of compound of Formula I, 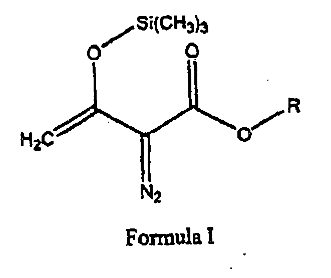 comprising reacting diazoacetoacetate of Formula II 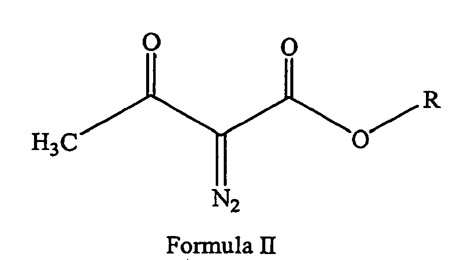 with iodotrimethylsilane in the presence of an organic base,
wherein R is hydrogen, C₁-C₆-alkyl, C₂-C₆-alkenyl, substituted or unsubstituted phenyl, benzhydryl, triphenylmethyl, or substituted or unsubstituted benzyl, and
wherein iodotrimethylsilane is prepared by reacting hexamethyldisilane with iodine. Preferably R is hydrogen, methyl, ethyl, p-nitro benzyl and p-methoxy benzyl.

The organic base can be an amine, such as trimethylamine, triethylamine, tributylamine, triisopropylamine, diisopropylethylamine, 1,8-diazabicyclo-[5.4.0]-undec-7-ene (DBU), 1,5-diazabicyclo-[4.3:0]-non-5-ene (DBN), 4-dimethylamino pyridine or mixtures thereof.

The reaction can be performed in an inert solvent, such as an alkyl ether, a chlorinated hydrocarbon, an ester, a-hydrocarbon, a nitrile, a dipolar aprotic solvents or a mixture thereof. The nitrile can be acetonitrile, benzonitrile or a mixture thereof. The chlorinated hydrocarbon can be methylene chloride, ethylene dichloride, carbon tetrachloride or a mixture thereof. The hydrocarbon can be hexane, cyclohexane, toluene, heptane, octane or a mixture thereof. The dipolar aprotic solvent can be dimethylsulfoxide, dimethylformamide or a mixture thereof. The cyclic ether can be dioxane, tetrahydrofuran and a mixture thereof.

In one embodiment, the reaction of the diazoacetoacetate of Formula II 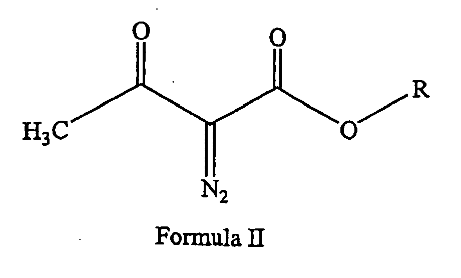 with iodotrimethylsilane is carried out at temperature of from about 10°C to about 30°C.

The iodotrimethyl silane can be prepared by refluxing a mixture of iodine and hexamethyldisilane in an organic solvent, such as methylene chloride, ethylene dichloride, toluene, tetrahydrofuran, dioxane, acetonitrile or a mixture thereof.

Conversion of a compound of Formula I to a substituted diazoazetidinone is also contemplated. Thus, the present invention encompasses a process for the preparation of a substituted diazoazetidinone of Formula III 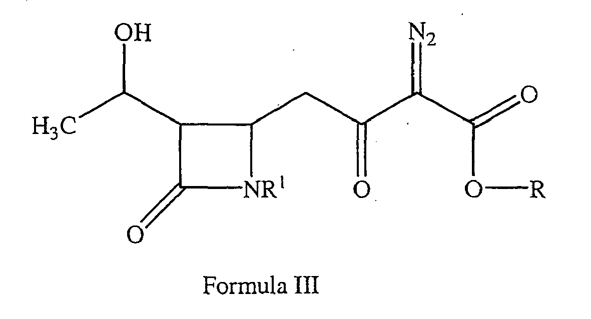 comprising reacting a silyl enol ether of Formula I, 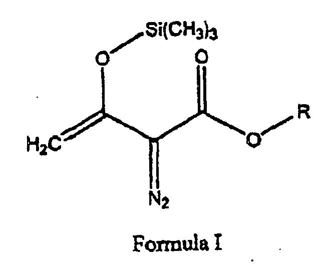 with an azetidinone of Formula IV, 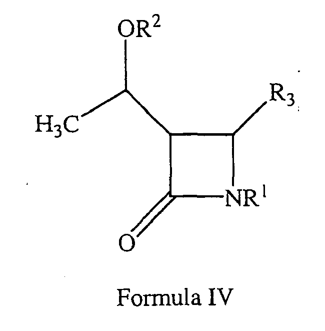 in the presence of catalytic amount of a Lewis acid, wherein R is hydrogen, C₁-C₆-alkyl, C₂-C₆-alkenyl, substituted or unsubstituted phenyl, benzhydryl, triphenylmethyl, or substituted or unsubstituted benzyl; R¹ is hydrogen or nitrogen protecting group; R² is trialkylsilyl group; and R³ is a leaving group. The Lewis acid can be silver tetrafluoroborate, mercury trifluoroacetate, titanium tetra chloride, silver perchlorate, zinc bromide, or a mixture thereof.

Also contemplated is converting the substituted diazoazetidinone of Formula III to a bicyclo ketoester. Accordingly, the present invention encompasses the conversion of a substituted diazoazetidinone of Formula III, 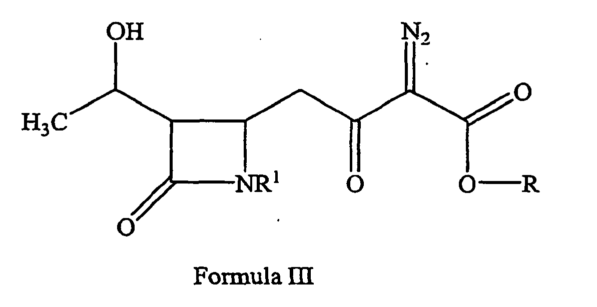 to a bicyclo ketoester of Formula V, 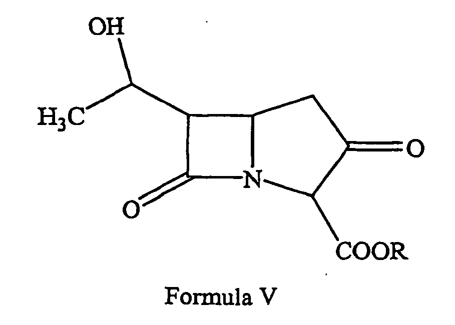 by cyclization of the substituted diazoazetidinone of Formula III, in the presence of a catalyst. The catalyst can be rhodium acetate, palladium acetate, rhodium octanoate, copper acetonate, copper sulfate, copper powder, and a mixture thereof.

The present invention also encompasses a process for making carbapenem antibiotic compounds, comprising:
a. reacting a diazoacetoacetate of Formula II 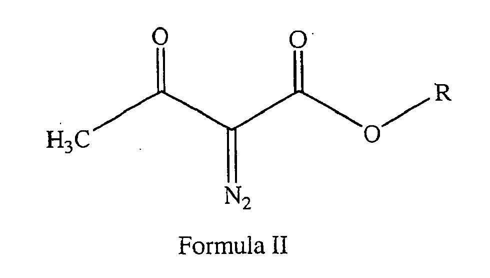 with iodotrimethylsilane in the presence of an organic base, wherein iodotrimethylsilane is prepared by reacting hexamethyldisilane with iodine, to form a silyl enol ether of Formula I 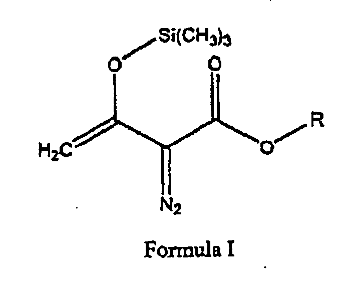
b. reacting the silyl enol ether of Formula I with an azetidinone of Formula IV 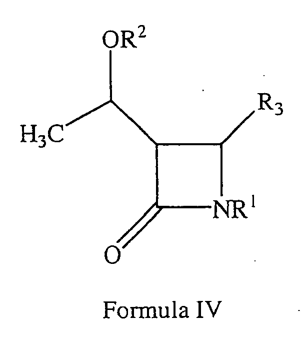 to form a substituted diazoazetidinone of Formula III 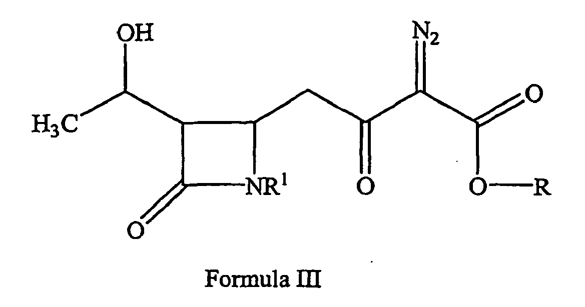
c. cyclization of the substituted diazoazetidinone of Formula III to the bicyclo ketoester of Formula V in the presence of a catalyst,
   wherein R is hydrogen, C₁-C₆-alkyl, C₂-C₆-alkenyl, substituted or unsubstituted phenyl, benzhydryl, triphenylmethyl, or substituted or unsubstituted benzyl; R¹ is hydrogen or nitrogen protecting group; R² is trialkylsilyl group; and R³ is a leaving group, and
d. converting the compound of Formula V to a carbepenem antibiotic compound.

In one embodiment, the conversion of the compound of Formula V to a carbepenem antibiotic compound comprises
a. acylation of the keto ester functionality of the compound of Formula V with an acylating agent;
b. treating the acylated compound resulting from step with a mercaptan reagent of formula HSCH₂CH₂NHR⁸ [wherein R⁸ is selected from hydrogen, a protecting group (selected from p-nitrobenzoxycarbonyl, o-nitrobenzoxycarbonyl, phenylacetyl, phenoxyacetyl, or trimethylsilyl), or-CH=R⁹, (wherein R⁹ is a protecting group selected from p-nitrobenzoxycarbonyl, o-nitrobenzoxycarbonyl, phenylacetyl, phenoxyacetyl, or trimethylsilyl)]; and
c. deblocking the compound resulting from step b by hydrolysis or hydrogenation to form a carbepenem antibiotic compound.

In another embodiment, the conversion of the compound of Formula V to a carbepenem antibiotic compound comprises
a. phosphorylating the keto ester functionality of the compound of Formula V with a phosphorohalidate to form an enolphosphate; and
b. reacting the enolphosphate with a thioalkylamine of formula HS(CH₂)₂NH₂, or an acid addition salt thereof, to form a carbepenem antibiotic compound.

### Detailed Description of the Invention

The present invention relates to a process for the preparation of 2-diazo-3-trimethylsilyloxy-3-butenoates derivatives of Formula I, 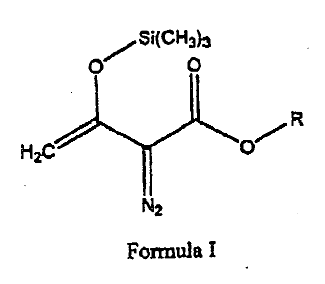 comprising reacting diazoacetoacetate of Formula II, 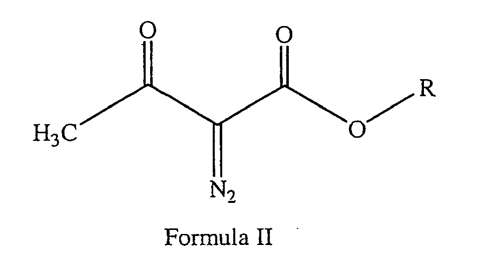 with iodotrimethylsilane in the presence of an organic base, wherein iodotrimethylsilane is prepared by reacting hexamethyldisilane with iodine and wherein R can be hydrogen, alkyl, alkenyl, substituted or unsubstituted phenyl, benzhydryl, triphenylmethyl, or substituted or unsubstituted benzyl. Preferably, alkyl is C₁-C₆-alkyl and alkenyl is C₂-C₆-alkenyl. Use of iodotrimethylsilane, which is prepared from hexamethyldisilane and iodine, does not generate any alkali metal halide salts during silylation.

Alkyl groups include, but are not limited to, methyl, ethyl, propyl, isopropyl, butyl, secondary butyl or tertiary butyl. Alkenyl groups include, but are not limited to, vinyl, allyl, isopropenyl, pentenyl or hexenyl. Substituted phenyl includes, but is not limited to, phenyl having 1-3 substituents, which independently can be hydrogen, bromine, chlorine, fluorine, C₁-C₄-alkyl, C₁-C₄-allsoxy, or nitro. Alkoxy groups include, but are not limited to, methoxy, ethoxy, propoxy, isopropoxy or butoxy. Substituted benzyl includes, but is not limited to, p-nitro,benzyl, p-methoxy benzyl, o-nitro benzyl, p-bromo benzyl or 2,4,6, trimethyl benzyl.

Suitable organic bases that can be used in the reaction of diazoacetoacetate of Formula II with iodotrimethylsilane are amines, such as trimethylamine, triethylamine, tributylamine, triisopropylamine, diisopropylethylamine, DBU (1,8-diazabicyclo- [5.4.0]-undec-7-ene), DBN (1,5-diazabicyclo-[4.3.0]-non-5-ene), 4-dimethylamino pyridine, or mixtures thereof.

Suitable solvents for the reaction of compounds of Formula II with iodotrimethylsilane include inert organic solvents that do not change under the reaction conditions. Such solvents include, but are not limited to, alkyl ethers, such as diethylether, diisopropylether or dimethoxyethane; nitriles, such as acetonitrile or benzonitrile; chlorinated hydrocarbons, such as methylene chloride, ethylene dichloride or carbon tetrachloride; esters, such as ethylacetate or isopropylacetate; hydrocarbons, such as hexane, cyclohexane, toluene, heptane or octane; dipolar aprotic solvents, such as dimethylsulfoxide or dimethylformamide; cyclic ethers, such as dioxane or tetrahydrofuran or mixtures thereof.

The reaction can be performed at temperatures of from about 10 °C to about 45 °C. In another embodiment, the reaction may be performed at temperatures of from about 15 °C to 25 °C.

Iodotrimethylsilane may be prepared by refluxing a mixture of iodine and hexamethyl disilane in an organic solvent. Suitable organic solvents utilized in preparing iodotrimethylsilane include, but are not limited to, methylene chloride, ethylene dichloride, toluene, tetrahydrofuran, dioxane, acetonitrile or mixtures thereof.

The diazoacetoacetate of Formula II, 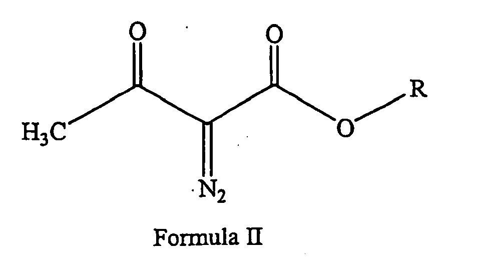 may be obtained by known processes, such as those processes disclosed in U.S. Patent Nos. 5,340,927; 4,683,296 and 4,525,582.

The compound of Formula I can be converted to substituted diazoazetidinone of Formula III, 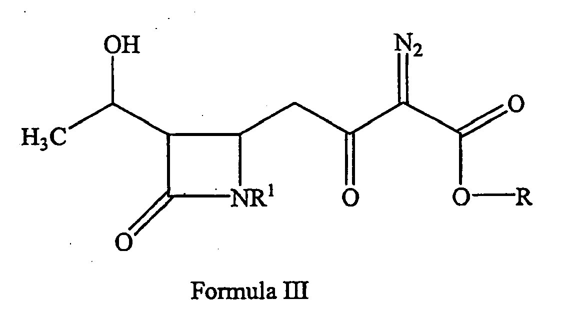 (wherein R can be hydrogen, alkyl, alkenyl, substituted or unsubstituted phenyl, benzhydryl, triphenylmethyl, or substituted or unsubstituted benzyl; and R¹ can be hydrogen or nitrogen protecting group) by known methods, such as those methods disclosed in U.S. Patent Nos. 5,998,612; 5,340,927; 5,071,966; 4,525,582 and 4,683,296.

In general, azetidinone of Formula IV 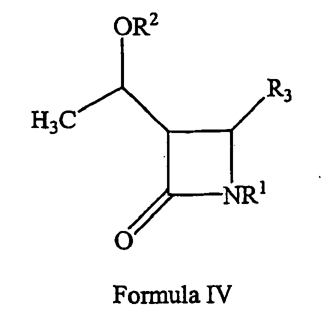 is reacted with silyl enol ether of Formula I in the presence of catalytic amount of a Lewis acid in an inert organic solvent, wherein R¹ can be hydrogen or nitrogen protecting group, R² can be trialkyl silyl group and R³ can be a leaving group. The Lewis acid can be, for example, silver tetrafluoroborate, mercury trifluoroacetate, titanium tetrachloride, silver perchlorate or zinc bromide. The reaction can be worked up with excess of methanol, and methane sulfonic acid or hydrochloric acid to yield the compound of Formula III.

The compounds of Formula III can also be prepared by reacting a silyl enol ether of Formula I and an azetidinone of Formula IV in the presence of a highly reactive silylating agent, such as trimethylsilyltriflate.

The compound of Formula III can in turn be converted to a bicyclo ketoester of Formula V 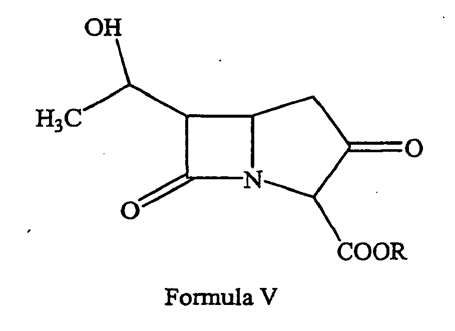 by methods known in the art, such as, for example, in U.S. Patent No. 4,739,048, which is incorporated herein by reference.

In general, bicyclo ketoesters of Formula V is prepared by the cyclization of diazoazetidinone of Formula IS. The reaction can be performed in the presence of a catalyst, such as rhodium acetate, palladium acetate, rhodium octanoate, copper acetonate, copper sulfate or copper powder. The reaction can be performed in a solvent, such as toluene or tetrahydrofuran at a temperature of 50 °C to 110 °C.

The compound of Formula V can be converted to thienamycin, imipenem, penepenem and other carbapenem antibiotic compounds by methods known in art, such as, for example, in U.S. Patent Nos. 4,739,048; 4,894,450; 4,292,436 and PCT Applications

For example, U.S. Patent Nos. 4,739,048, and 4,292,436 disclose acylating the keto ester functionality of the compound of Formula V with an acylating agent such as R°X such as p-toluenesulfonic acid anhydride, p-nitrophenylsulfonic acid anhydride, 2,4,6-triisopropylphenylsulfonic acid anhydride, methanesulfonic acid anhydride, toluenesulfonyl chloride, p-bromophenylsulfonyl chloride, or the like wherein X is the corresponding leaving group such as toluene sulfonyloxy, p-nitrophenylsulfonyloxy, methanesulfonyloxy, p-bromophenylsulfonyloxy and other leaving groups which are established by conventional procedures and are well known in the art, thereby forming a compound which is treated in a solvent with a mercaptan reagent of formula HS(CH₂)₂-NHR⁸, wherein R⁸ can be hydrogen, a protecting group (selected from p-nitrobenzoxycarbonyl, o-nitrobenzoxycarbonyl, phenylacetyl, phenoxyacetyl, or trimethylsilyl), or -CH=R⁹, (wherein R⁹ is a protecting group selected from p-nitrobenzoxycarbonyl, o-nitrobenzoxycarbonyl, phenylacetyl, phenoxyacetyl, or trimethylsilyl), and deblocking the resulting compound by hydrolysis or hydrogenolysis to form a carbepenem antibiotic compound.

For example, U.S. Patent No. 4,894,450 discloses phosphorylation of a compound of Formula V with phosphorohalidates in a substantially inert organic solvent containing a suitable tertiary amine or a hindered base to form an enolphosphate, which is thereafter reacted with a thioalkylamine of formula HS(CH₂)₂-NH₂ to form a carbepenem antibiotic compound.

In the following section embodiments are described by way of examples to illustrate the process of invention. However, these are not intended in any way to limit the scope of the present invention. Several variants of these examples would be evident to persons ordinarily skilled in the art.

### Example

### Preparation of Iodotrimethylsilane (Me₃SiI)

Iodine (63.7 g) was suspended in methylene chloride (200 mL) and stirred for 10 to 15 minutes. Hexamethyl disilane (39.0 g) was then added in 35 to 40 minutes at room temperature and the reaction mixture was allowed to stir for 30 minutes. The mixture was heated to reflux and refluxing was continued for 2.0 hours. The reaction mixture containing iodotrimethylsilane was cooled to 20 to 25°C before use.

### Example 1: Preparation of p-nitrobenzyl-2-diazo-3-trimethylsilyloxy-3-butenoate

p-Nitrobenzyl-2-diazoacetoacetate (120 g) was suspended in a mixture of methylene chloride (50 mL) and toluene (100 mL) and was cooled to 18 to 20 °C. Triethylamine (54.3 g) was added and stirred for 5 minutes. Iodotrimethylsilane reagent was added in 30 to 35 minutes at 20 to 30°C. Stirring was continued for 2.5 to 3.0 hours at 20 to 25°C. The reaction mixture was then diluted with toluene (700 mL) and the mixture of methylene chloride and toluene was evaporated (~500 mL) under vacuum (650 mmHg to 700 mmHg) (86.6-93.2 mPA) to give a slurry containing p-nitrobenzyl-2-diaxo-3-trimethylsilyloxy-3-butenoate. The slurry was filtered through cloth and the filtered material was washed with toluene.

### Example 2: Preparation of (3S,4R)-3-[(1R)-hydroxyethyl]-4-[3-(4-nitrobenzyloxy)carbonyl-2-oxo-3-diazopropyl]azetidin-2-one

(3R,4R)-3-[(1R)-tert-butyldimethylsilyloxyethyl]-4-acetoxyazetidin-2-one (100 g) and anhydrous zinc chloride (16 g) was added to the filtrate obtained from Example 1 at 25 °C and the reaction mixture was stirred for 15 hours at 20 to 30 °C. After 15 hours, methanol (250 mL) and methane sulfonic acid (14.2 g) were added to the above reaction mixture. The precipitation, of solid began after about 60 minutes. The reaction mixture was allowed to stir for an additional 12 to 15 hours until unreacted p-nitrobenzyl-2-diazo-3-trimethylsilyloxy-3-butenoate was not present at more than 2.0% by HPLC analysis. The slurry was cooled to 0 °C to 5 °C and stirred for 60 minutes. The product was filtered and washed with toluene. The material was dried to obtain a free flowing solid. The solid was suspended in methanol (300 ml) and cooled to 3 °C to 5°C and the suspension was stirred for 30 minutes, filtered and washed with methanol (100 mL). The product was air dried at 45 to 50°C till moisture content was less than 1.0% weight by weight.
Yield: 108 g

### Example 3: Preparation of (5R,6S)p-Nitrobenzyl-6-[(1R)hydroxyethyl]-1-azabicyclo[3.2.0] heptane-3,7-dione-2-carboxylate

(3S,4R)-3-[(1R)-hydroxyethyl]-4-[3-(4-nitrobenzyloxy)carbonyl-2-oxo-3-diazopropyl] azetidin-2-one (250 g) and rhodium octanoate dimmer (1.0 g) were added to dichloromethane (2.5 L) and heated to reflux for 4 to 5 hours. The reaction was monitored by HPLC until unreacted azetidinone was not more than 2.0%. To the clear dichloromethane solution, cyclohexane was added to precipitate the product at 20 °C to 30 °C. The product was filtered, washed with cyclohexane and dried.
Yield: 188g

While the present invention has been described in terms of its specific embodiments, certain modifications and equivalents will be apparent to those skilled in the art and are intended to be included within the scope of the present invention.

## Claims

1. A process for the preparation of compound of Formula I, 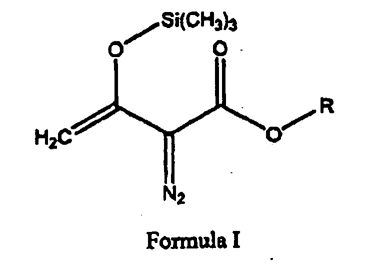 comprising reacting diazoacetoacetate of Formula II with iodotrimethylsilane in the presence of an organic base, 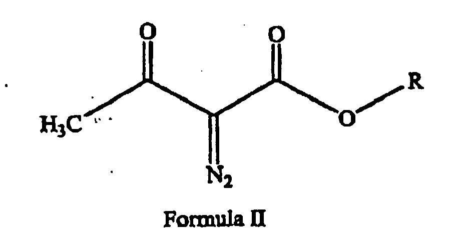 wherein R is hydrogen, C₁-C₆-alkyl, C₂₋C₆-alkenyl, substituted or unsubstituted phenyl, benzhydryl, triphenylmethyl, or substituted or unsubstituted benzyl, and
wherein iodotrimethylsilane is prepared by reacting hexamethyl silane with iodine.

2. The process according to claim 1, wherein R is hydrogen, methyl ethyl, p-nitro benzyl and p-mcthoxy benzyl.

3. The process according to claim 1, wherein the organic is an amine.

4. The process according to claim 3, wherein the amine is selected from the group consisting of trimethylamine, triethylamine, tributylamine, trisopropylamine, diisopropylethylamine, 1,8-diazabicyclo-[5.4.0]-undec-7-ene(DBU), 1,5 diazabicyclo-[4.3.0]-non-5-ene (DBN), 4-dimethylamino pyridine and a mixture there of.

5. The process according to claim 1, wherein the reaction is performed in an inert solvent.

6. The process according to claim 5 wherein the inert solve is selected from the group consisting of an alkyl ether, a chlorinated hydrocarbon, an ester, a hydrocarbon, a nitrile, a dipolar aprotic solvents and a mixture thereof.

7. The process according to claim 6, wherein the nitrile is selected from the group consisting of acetonitrile, benzonitrile and a mixture thereof.

8. The process according to claim 6, wherein chlorinated hydrocarbon is selected from the group consisting of methylene chloride, ethylene dichloride, carbon tetrachloride and a mixture thereof

9. The process according to claim 6, wherein hydrocarbon is selected from the group consisting of hexane, cyclohexane, toluene, heptane, octane and a thereof.

10. The process according to claim 6, wherein dipolar aprotic solvent is selected from the group consisting of dimethylsulfoxide, dimethylformamide and a mixture thereof.

11. The process according to claim 6 wherein cyclic ether is selected from the group consisting of dioxane, tetrahydrofuran and a mixture thereof.

12. The process according to claim 1, wherein the reaction of diazoacetoacetate of Formula II 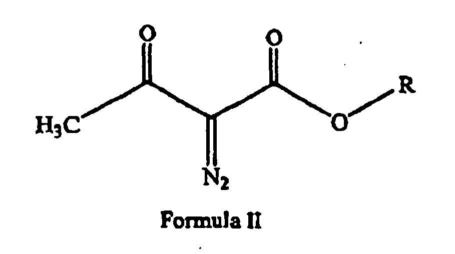 with iodotrimethylsilane is carried out at temperature of from about 10 °C to about 30°C.

13. The process according to claim 1, wherein iodotrimethyl silane is prepared by refluxing a mixture of iodine and hexamethyldisilane in an organic solvent.

14. The process according to claim 13, wherein organic solvent is selected from the group consisting of methylene chloride, ethylene dichloride, toluene, tetrahydrofuran, dioxane, acetonitrile and a mixture thereof.

15. A process for the preparation of a substituted diazoazetidinone of Formula III 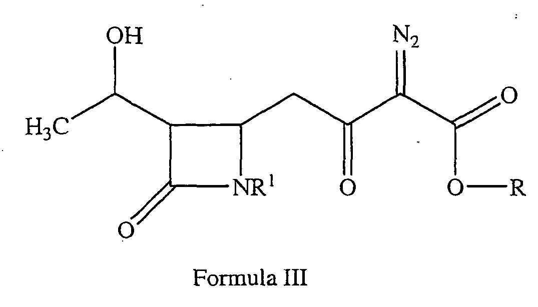 comprising reacting a silyl enol ether of Formula I prepared by the process of claim 1 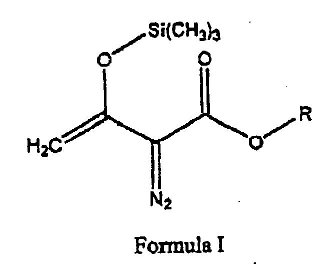 with an azetidinone of Formula IV, 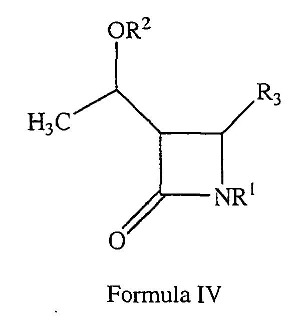 in the presence of catalytic amount of a Lewis acid,
wherein R is hydrogen, C₁-C₆-alkyl, C₂-C₆-alkenyl, substituted or unsubstituted phenyl, benzhydryl, triphenylmethyl, or substituted or unsubstituted benzyl; R¹ is hydrogen or nitrogen protecting group; R² is trialkylsilyl group; and R³ is a leaving group.

16. The process according to claim 15, wherein the Lewis acid is selected from the group consisting of silver tetrafluoroborate, mercury trifluoroacetate, titanium tetra chloride, silver perchlorate, zinc bromide, and a mixture thereof.

17. The process according to claim 15, further comprising converting the substituted diazoazetidinone of Formula III, 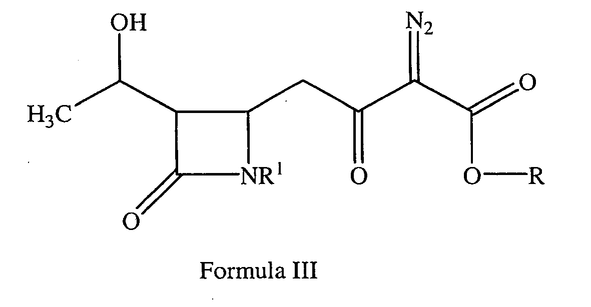 to a bicyclo ketoester of Formula V, 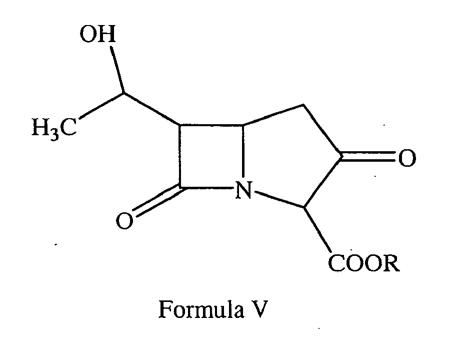 by cyclization of the substituted diazoazetidinone of Formula III, in the presence of a catalyst.

18. The process according to claim 17, wherein the catalyst is selected from the group consisting of rhodium acetate, palladium acetate, rhodium octanoate, copper acetonate, copper sulfate, copper powder, and a mixture thereof.

19. A process for the preparation of a bicyclic ketoester of Formula V 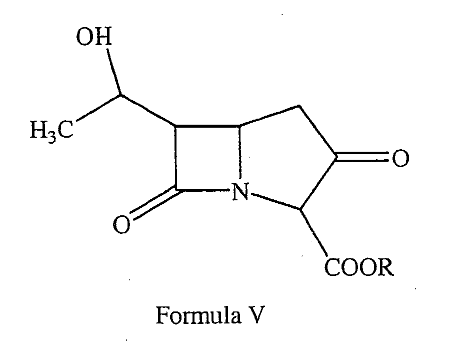 comprising the steps of
a. reacting a diazoacetoacetate of Formula II 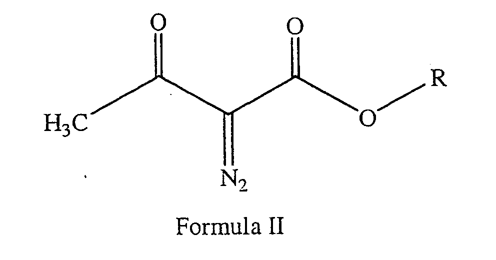 with iodotrimethylsilane in the presence of an organic base, wherein iodotrimethylsilane is prepared by reacting hexamethyldisilane with iodine, to form a silyl enol ether of Formula I by the process of claim 1, 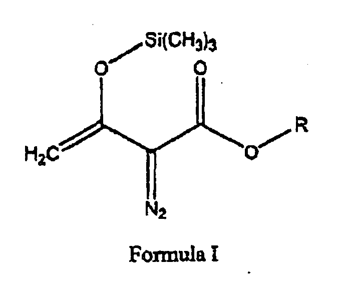
b. reacting the silyl enol ether of Formula I with an azetidinone of Formula IV 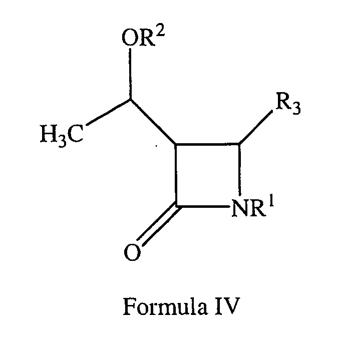 to form a substituted diazoazetidinone of Formula III, and 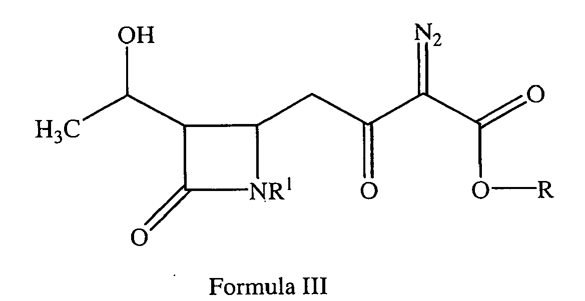
c. cyclization of the substituted diazoazetidinone of Formula III to the bicyclo ketoester of Formula V in the presence of a catalyst,
wherein R is hydrogen, C₁-C₆-alkyl, C₂-C₆-alkenyl, substituted or unsubstituted phenyl, benzhydryl, triphenylmethyl, or substituted or unsubstituted benzyl; R¹ is hydrogen or nitrogen protecting group; R² is trialkylsilyl group; and R³ is a leaving group.

20. A process for making carbapenem antibiotic compounds, comprising:
a. reacting a diazoacetoacetate of Formula II 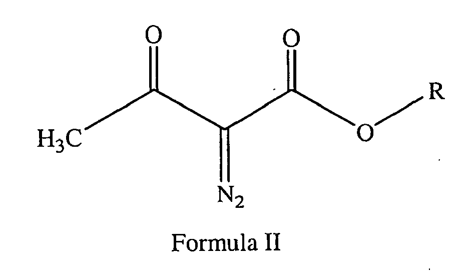 with iodotrimethylsilane in the presence of an organic base, wherein iodotrimethylsilane is prepared by reacting hexamethyldisilane with iodine, to form a silyl enol ether of Formula I by the process of claim 1. 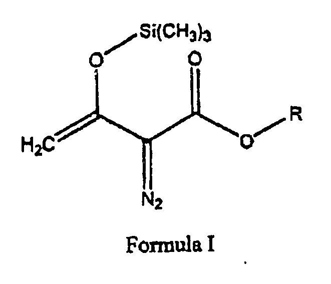
b. reacting the silyl enol ether of Formula I with an azetidinone of Formula IV 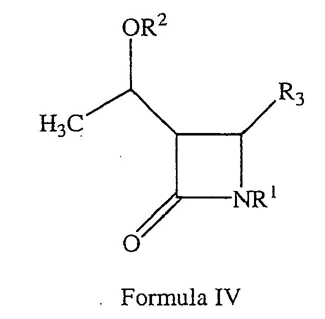 to form a substituted diazoazetidinone of Formula III 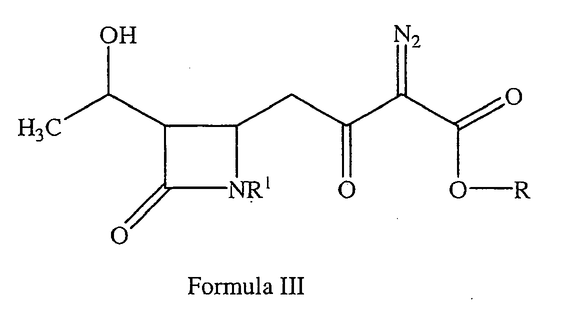
c. cyclization of the substituted diazoazetidinone of Formula III to the bicyclo ketoester of Formula V in the presence of a catalyst,
wherein R is hydrogen, C₁-C₆-alkyl, C₂-C₆-alkenyl, substituted or unsubstituted phenyl, benzhydryl, triphenylmethyl, or substituted or unsubstituted benzyl; R¹ is hydrogen or nitrogen protecting group; R² is trialkylsilyl group; and R³ is a leaving group, and
d. converting the compound of Formula V to a carbepenem antibiotic compound.

21. The process of claim 20, wherein conversion of the compound of Formula V to a carbepenem antibiotic compound comprises
a. acylation of the keto ester functionality of the compound of Formula V with an acylating agent;
b. treating the acylated compound resulting from step with a mercaptan reagent of formula HSCH₂CH₂NHR⁸ [wherein R⁸ is selected from hydrogen, a protecting group (selected from p-nitrobenzoxycarbonyl, o-nitrobenzoxycarbonyl, phenylacetyl. phenoxyacetyl, or trimethylsilyl), or -CH=R⁹, (wherein R⁹ its a protecting group selected from p-nitrobcnzoxycarhonyl, o-nitrirobenzoxycarbonyl, phenylacetyl, phenoxyacetyl, or trimethylsilyl)]; and
c. deblocking the compound resulting from step b by hydrolysis or hydrogenation to form a carbepenem antibiotic compound.

22. The process of claim 21, wherein conversion of the compound of Formula V to a carbepenem antibiotic compound comprises
a. phosphorylating the keto ester functionality of the compound of formula V with a phosphorohalidate to form an enolphosphate; and
b. reacting the enolphosphate with a thioalkylamine of formula HS(CH₂)₂NH₂, or an acid addition salt thereof, to form a carbepenem antibiotic compound.

## Patentansprüche

1. Verfahren zur Herstellung einer Verbindung der Formel I, 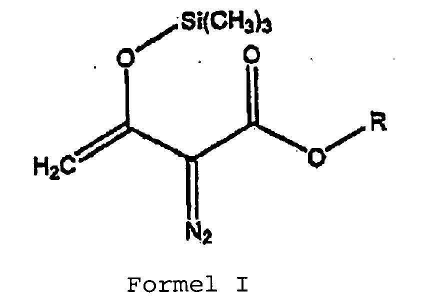 umfassend die Umsetzung des Diazoacetoacetats der Formel II mit Iodtrimethylsilan in Gegenwart einer organischen Base, 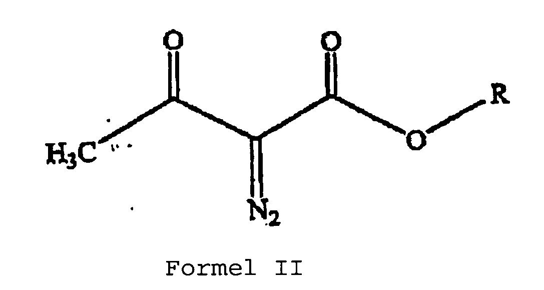 worin R Wasserstoff, C₁-C₆-Alkyl, C₂-C₆-Alkenyl, substituiertes oder unsubstituiertes Phenyl, Benzhydryl, Triphenylmethyl oder substituiertes oder unsubstituiertes Benzyl ist, und worin das Iodtrimethylsilan durch Umsetzung von Hexamethyldisilan mit Iod hergestellt wird.

2. Verfahren nach Anspruch 1, worin R Wasserstoff, Methyl, Ethyl, p-Nitrobenzyl und p-Methoxybenzyl ist.

3. Verfahren nach Anspruch 1, worin die organische Base ein Amin ist.

4. Verfahren nach Anspruch 3, worin das Amin aus der aus Trimethylamin, Triethylamin, Tributylamin, Triisopropylamin, Diisopropylethylamin, 1,8-Diazabicyclo[5.4.0]-undec-7-en (DBU), 1,5-Diazabicyclo[4.3.0]non-5-en (DBN), 4-Dimethylaminopyridin und einem Gemisch aus diesen bestehenden Gruppe ausgewählt ist.

5. Verfahren nach Anspruch 1, worin die Reaktion in einem inerten Lösungsmittel ausgeführt wird.

6. Verfahren nach Anspruch 5, worin das inerte Lösungsmittel aus der aus einem Alkylether, einem Chlorkohlenwasserstoff, einem Ester, einem Kohlenwasserstoff, einem Nitril, einem dipolaren aprotischen Lösungsmittel und einem Gemisch aus diesen bestehenden Gruppe ausgewählt ist.

7. Verfahren nach Anspruch 6, worin das Nitril aus der aus Acetonitril, Benzonitril und einem Gemisch aus diesen bestehenden Gruppe ausgewählt ist.

8. Verfahren nach Anspruch 6, worin der Chlorkohlenwasserstoff aus der aus Methylenchlorid, Ethylendichlorid, Tetrachlorkohlenstoff und einem Gemisch aus diesen bestehenden Gruppe ausgewählt ist.

9. Verfahren nach Anspruch 6, worin der Kohlenwasserstoff aus der aus Hexan, Cyclohexan, Toluol, Heptan, Octan und einem Gemisch aus diesen bestehenden Gruppe ausgewählt ist.

10. Verfahren nach Anspruch 6, worin das dipolare aprotische Lösungsmittel aus der aus Dimethylsulfoxid, Dimethylformamid und einem Gemisch aus diesen bestehenden Gruppe ausgewählt ist.

11. Verfahren nach Anspruch 6, worin der cyclische Ether aus der aus Dioxan, Tetrahydrofuran und einem Gemisch aus diesen bestehenden Gruppe ausgewählt ist.

12. Verfahren nach Anspruch 1, worin die Umsetzung des Diazoacetoacetats der Formel II 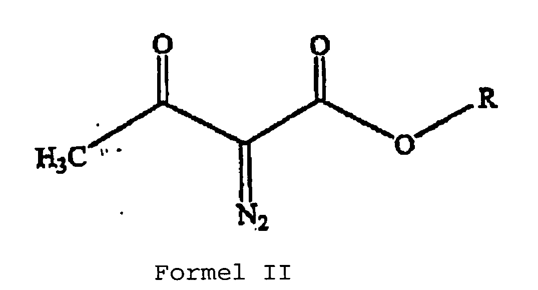 mit Iodtrimethylsilan bei einer Temperatur von etwa 10 bis etwa 30 °C durchgeführt wird.

13. Verfahren nach Anspruch 1, worin Iodtrimethylsilan durch Kochen eines Gemischs von Iod und Hexamethylsilan in einem organischen Lösungsmittel am Rückfluß hergestellt wird.

14. Verfahren nach Anspruch 13, worin das organische Lösungsmittel aus der aus Methylenchlorid, Ethylendichlorid, Toluol, Tetrahydrofuran, Dioxan, Acetonitril und einem Gemisch aus diesen bestehenden Gruppe ausgewählt ist.

15. Verfahren zur Herstellung eines substituierten Diazoazetidinons der Formel III, 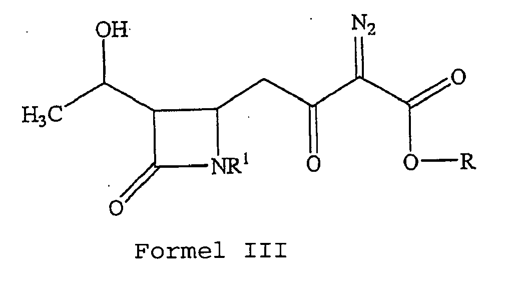 umfassend die Umsetzung eines Silyl-Enol-Ethers der Formel I, hergestellt mittels des Verfahren nach Anspruch 1, 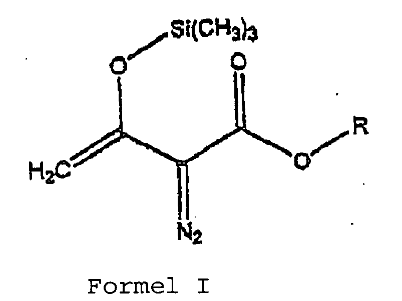 mit einem Azetidinon der Formel IV 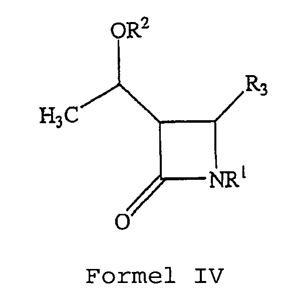 in Gegenwart einer katalytischen Menge einer Lewissäure, wobei R Wasserstoff, C₁-C₆-Alkyl, C₂-C₆-Alkenyl, substituiertes oder unsubstituiertes Phenyl, Benzhydryl, Triphenylmethyl oder substituiertes oder unsubstituiertes Benzyl, R¹ Wasserstoff oder eine Schutzgruppe für Stickstoff, R² eine Trialkylsilylgruppe und R³ eine Abgangsgruppe ist.

16. Verfahren nach Anspruch 15, worin die Leweissäure aus der aus Silbertetrafluorborat, Quecksilbertrifluoracetat, Titantetrachlorid, Silberperchlorat, Zinkbromid und einem Gemisch aus diesen bestehenden Gruppe ausgewählt ist

17. Verfahren nach Anspruch 15, ferner die Umwandlung des substituierten Diazoazetidinons der Formel III 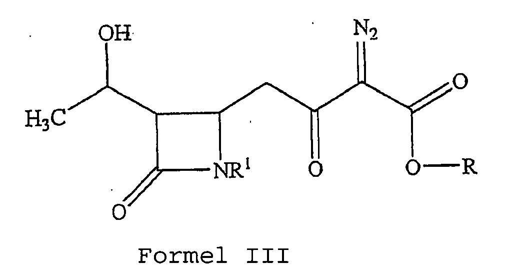 in einen Bicycloketoester der Formel V 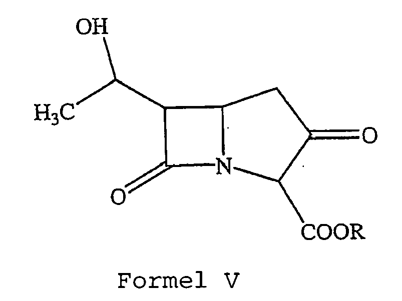 durch Cyclisierung des substituierten Diazoazetidinons der Formel III in Gegenwart eines Katalysators umfassend.

18. Verfahren nach Anspruch 17, worin der Katalysator aus der aus Rhodiumacetat, Palladiumacetat, Rhodiumoctanoat, Kupferacetonat, Kupfersulfat, Kupferpulver und einem Gemisch aus diesen bestehenden Gruppe ausgewählt ist.

19. Verfahren zur Herstellung eines bicyclischen Ketoester der Formel V, 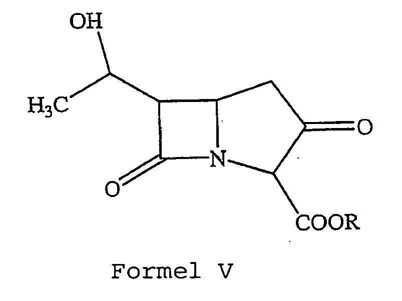 umfassend die Schritte
a) Umsetzung eines Diazoacetoacetats der Formel II 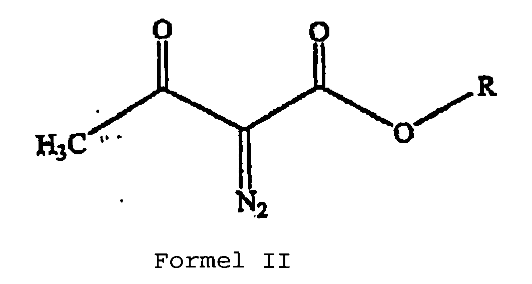 mit Iodtrimethylsilan in Gegenwart einer organischen Base, wobei das Iodtrimethylsilan durch Umsetzung von Hexamethyldisilan mit Iod hergestellt wird, unter Bildung eines Silyl-Enol-Ethers der Formel I mittels des Verfahrens nach Anspruch 1, 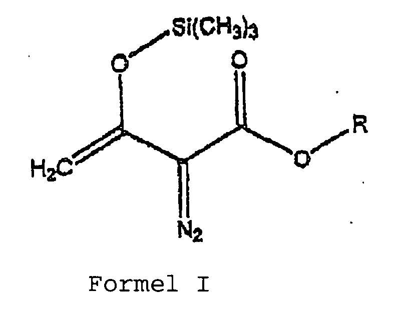
b) Umsetzung des Silyl-Enol-Ethers der Formel I mit einem Azetidinon der Formel IV 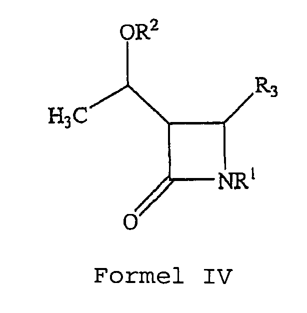 unter Bildung eines substituierten Dizoazetidinons der Formel III und 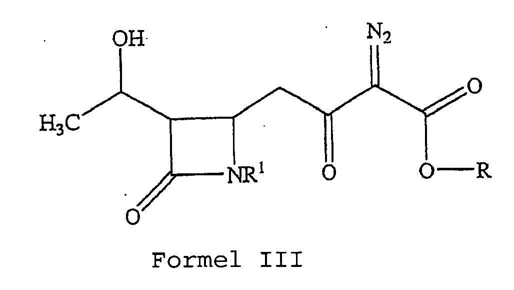
c) Cyclisierung des substituierten Diazoazetidinons der Formel III zum Bicycloketoester der Formel V in Gegenwart eines Katalysators,
wobei R Wasserstoff, C₁-C₆-Alkyl, C₂-C₆-Alkenyl, substituiertes oder unsubstituiertes Phenyl, Benzhydryl, Triphenylmethyl oder substituiertes oder unsubstituiertes Benzyl, R¹ Wasserstoff oder eine Schutzgruppe für Stickstoff, R² eine Trialkylsilylgruppe und R³ eine Abgangsgruppe ist.

20. Verfahren zur Herstellung von antibiotischen Carbapenem-Verbindungen, umfassend
a) Umsetzung eines Diazoacetoacetats der Formel II 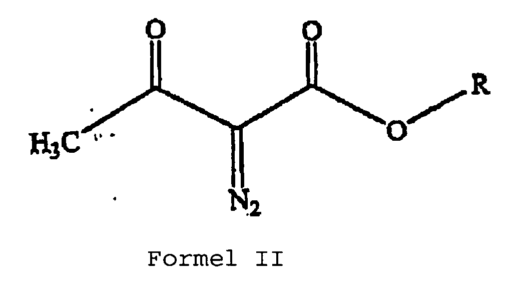 mit Iodtrimethylsilan in Gegenwart einer organischen Base, wobei das Iodtrimethylsilan durch Umsetzung von Hexamethyldisilan mit Iod hergestellt wird, unter Bildung eines Silyl-Enol-Ethers der Formel I mittels des Verfahrens nach Anspruch 1, 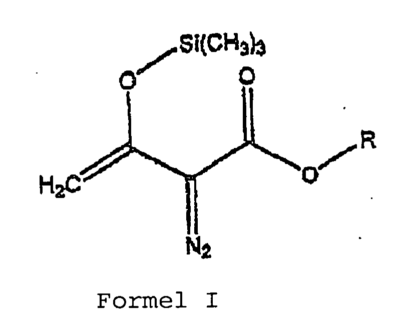
b) Umsetzung des Silyl-Enol-Ethers der Formel I mit einem Azetidinon der Formel IV 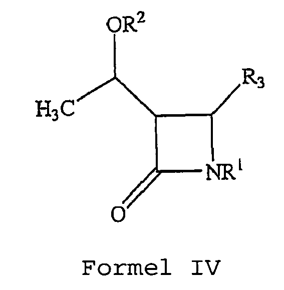 unter Bildung eines substituierten Diazoazetidinons der Formel III, 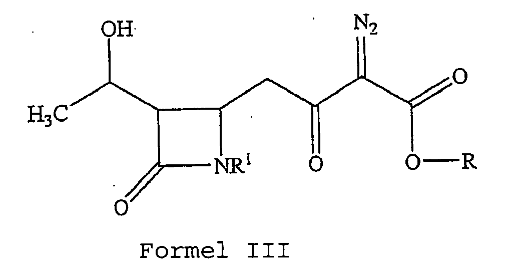
c) Cyclisierung des substituierten Diazoazetidinons der Formel III zum bicyclischen Ketoester der Formel V in Gegenwart eines Katalysators,
wobei R Wasserstoff, C₁-C₆-Alkyl, C₂-C₆-Alkenyl, substituiertes oder unsubstituiertes Phenyl, Benzhydryl, Triphenylmethyl oder substituiertes oder unsubstituiertes Benzyl, R¹ Wasserstoff oder eine Schutzgruppe für Stickstoff, R² eine Trialkylsilylgruppe und R³ eine Abgangsgruppe ist,
d) Umwandlung der Verbindung der Formel V in eine antibiotische Carbapenem-Verbindung.

21. Verfahren nach Anspruch 20, worin die Umwandlung der Verbindung der Formel V in eine antibiotische Carbapenem-Verbindung umfaßt
a) Acylierung der Ketoester-Funktionalität der Verbindung nach Formel V mit einem Acylierungsmittel,
b) Behandlung der aus dem Schritt a) erhaltenen acylierten Verbindung mit einem Mercaptan-Reagenz der Formel HSCH₂CH₃NHR₈, [worin R₈ ausgewählt ist aus Wasserstoff, einer Schutzgruppe (ausgewählt aus p-Nitrobenzoxycarbonyl, O-Nitrobenzoxycarbonyl, Phenylacetyl, Phenoxyacetyl oder Trimethylsilyl), oder -CH=_{R9} (worin R₉ eine aus p-Nitrobenzoxycarbonyl, o-Nitrobenzoxycarbonyl, Phenylacetyl, Phenoxyacetyl oder Trimethylsilyl ausgewählte Schutzgruppe ist)] und
c) Entblocken der im Schritt b) erhaltenen Verbindung durch Hydrolyse oder Hydrierung unter Bildung einer antibiotischen Carbapenem-Verbindung.

22. Verfahren nach Anspruch 21, wobei die Umwandlung der Verbindung der Formel V zur antibiotischen Carbapenem-Verbindung
a) die Phosphorylierung der Ketoester-Funktionalität der Verbindung der Formel V mit einem Phosphorhalidat unter Bildung eines Enolphosphats und
b) die Umsetzung des Enolphosphats mit einem Thioalkylamin der Formel HS(CH₂)₂NH₂ oder einem Säureadditionssalz davon unter Bildung einer antibiotischen Carbapenem-Verbindung umfasst.

## Revendications

1. Procédé pour la préparation d'un composé de formule I : 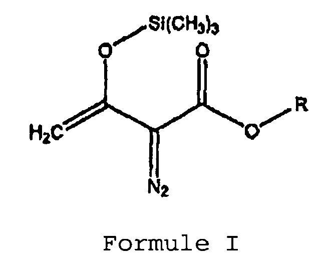 comprenant la réaction de diazoacétoacétate de formule II avec de l'iodotriméthylsilane en présence d'une base organique, 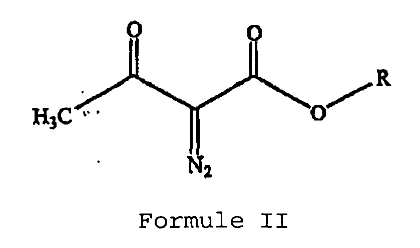 dans laquelle R représente un atome d'hydrogène, un alkyle en C₁-C₆, un alcényle en C₂-C₆, un phényle substitué ou non substitué, un benzhydryle, un triphénylméthyle ou un benzyle substitué ou non substitué, et
dans lequel l'iodotriméthylsilane est préparé en faisant réagir de l'hexaméthyldisilane avec de l'iode.

2. Procédé selon la revendication 1, dans lequel R représente un atome d'hydrogène, un méthyle, un éthyle, un p-nitrobenzyle et un p-méthoxybenzyle.

3. Procédé selon la revendication 1, dans lequel la base organique est une amine.

4. Procédé selon la revendication 3, dans lequel l'amine est choisie dans le groupe constitué de la triméthylamine, de la triéthylamine, de la tributylamine, de la triisopropylamine, de la diisopropyléthylamine, du 1,8-diazabicyclo-[5,4.0]-undéc-7-ène (DBU), du 1,5-diazabicyclo-[4.3.0]-non-5-ène (DBN), de la 4-diméthylamino-pyridine et d'un de leurs mélanges.

5. Procédé selon la revendication 1, dans lequel la réaction est effectuée dans un solvant inerte.

6. Procédé selon la revendication 5, dans lequel le solvant inerte est choisi dans le groupe constitué d'un alkyléther, d'un hydrocarbure chloré, d'un ester, d'un hydrocarbure, d'un nitrile, d'un solvant aprotique dipolaire et d'un de leurs mélanges.

7. Procédé selon la revendication 6, dans lequel le nitrile est choisi dans le groupe constitué de l'acétonitrile, du benzonitrile et d'un de leurs mélanges.

8. Procédé selon la revendication 6, dans lequel l'hydrocarbure chloré est choisi dans le groupe constitué du chlorure de méthylène, du dichlorure d'éthylène, du tétrachlorure de carbone et d'un de leurs mélanges.

9. Procédé selon la revendication 6, dans lequel l'hydrocarbure est choisi dans le groupe constitué de l'hexane, du cyclohexane, du toluène, de l'heptane, de l'octane et d'un de leurs mélanges.

10. Procédé selon la revendication 6, dans lequel le solvant aprotique dipolaire est choisi dans le groupe constitué du sulfoxyde de diméthyle, du diméthylformamide et d'un de leurs mélanges.

11. Procédé selon la revendication 6, dans lequel l'éther cyclique est choisi dans le groupe constitué du dioxanne, du tétrahydrofuranne et d'un de leurs mélanges.

12. Procédé selon la revendication 1, dans lequel la réaction de diazoacétoacétate de formule II : 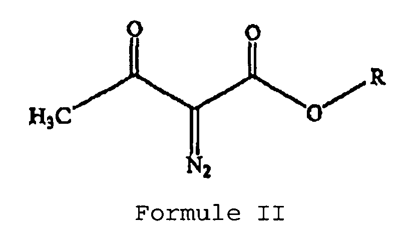 avec de l'iodotriméthylsilane est effectuée à une température d'environ 10 °C à environ 30 °C.

13. Procédé selon la revendication 1, dans lequel l'iodotriméthylsilane est préparé en soumettant au reflux un mélange d'iode et d'hexaméthyldisilane dans un solvant organique.

14. Procédé selon la revendication 13, dans lequel le solvant organique est choisi dans le groupe constitué du chlorure de méthylène, du dichlorure d'éthylène, du toluène, du tétrahydrofuranne, du dioxanne, de l'acétonitrile et d'un de leurs mélanges.

15. Procédé pour la préparation d'une diazoazétidinone substituée de formule III : 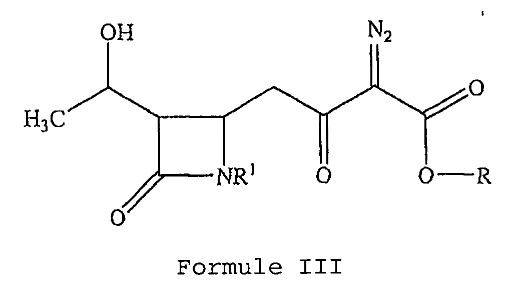 comprenant la réaction d'un silylénoléther de formule I préparée par le procédé selon la revendication 1 : 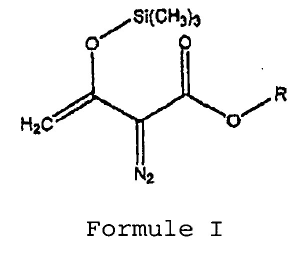 avec une azétidinone de formule IV : 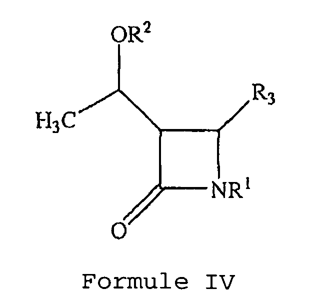 en présence d'une quantité catalytique d'un acide de Lewis,
dans lesquelles formules R représente un atome d'hydrogène, un alkyle en C₁-C₆, un alcényle en C₂-C₆, un phényle substitué ou non substitué, un benzhydryle, un triphénylméthyle ou un benzyle substitué ou non substitué ; R¹ représente l'hydrogène ou un groupement protecteur de l'azote; R² est un groupement trialkylsilyle; et R³ est un groupement partant.

16. Procédé selon la revendication 15, dans lequel l'acide de Lewis est choisi dans le groupe constitué du tétrafluoroborate d'argent, du trifluoroacétate de mercure, du tétrachlorure de titane, du perchlorate d'argent, du bromure de zinc et d'un de leurs mélanges.

17. Procédé selon la revendication 15, comprenant en outre la conversion de la diazoazétidinone substituée de formule III : 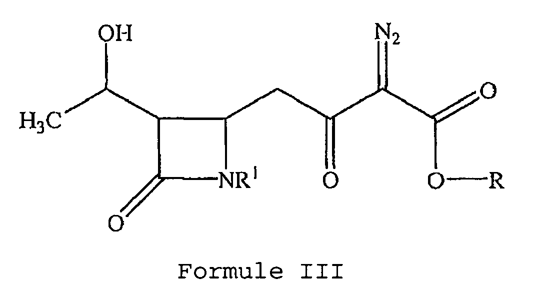 en un cétoester bicyclique de formule V : 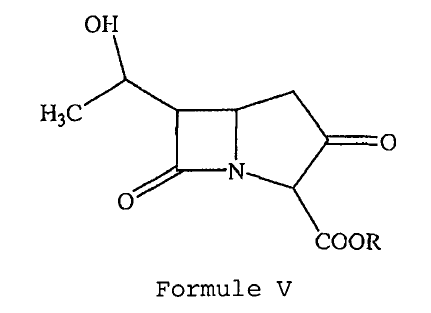 par cyclisation de la diazoazétidinone substituée de formule III, en présence d'un catalyseur.

18. Procédé selon la revendication 17, dans lequel le catalyseur est choisi dans le groupe constitué de l'acétate de rhodium, de l'acétate de palladium, de l'octanoate de rhodium, de l'acétonate de cuivre, du sulfate de cuivre, de la poudre de cuivre et d'un de leurs mélanges.

19. Procédé pour la préparation d'un cétoester bicyclique de formule V : 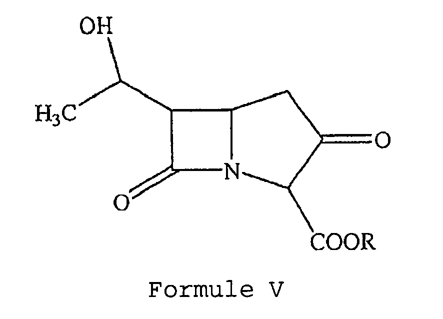 comprenant les étapes consistant à :
a. faire réagir un diazoacétoacétate de formule II : 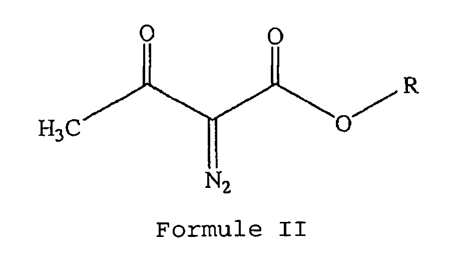 avec de l'iodotriméthylsilane en présence d'une base organique, l'iodotriméthylsilane étant préparé en faisant réagir de l'hexaméthyldisilane avec de l'iode pour former un silylénoléther de formule I par le procédé selon la revendication 1 : 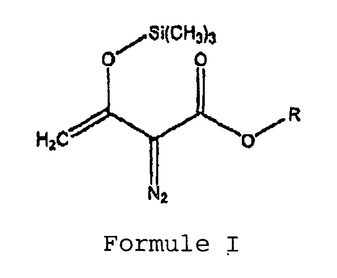
b. faire réagir le silylénoléther de formule I avec de l'azétidinone de formule IV : 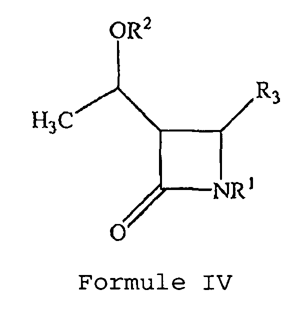 pour former une diazoazétidinone substituée de formule III, et 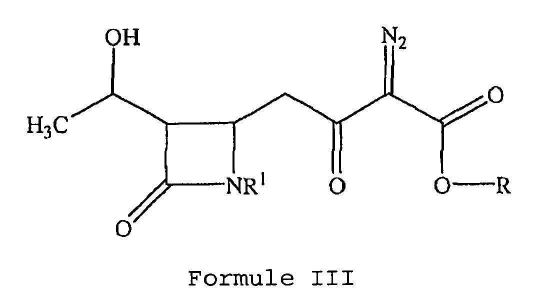
c. cycliser la diazoazétidinone substituée de formule III en cétoester bicyclique de formule V en présence d'un catalyseur,
dans lesquelles R représente un atome d'hydrogène, un alkyle en C₁-C₆, un alcényle en C₂-C₆, un phényle substitué ou non substitué, un benzhydryle, un triphénylméthyle ou un benzyle substitué ou non substitué ; R¹ représente de l'hydrogène ou un groupement protecteur de l'azote ; R² est un groupement trialkylsilyle ; et R³ est un groupement partant.

20. Procédé pour préparer des composés antibiotiques de carbapénème, comprenant :
a. la réaction d'un diazoacétoacétate de formule II : 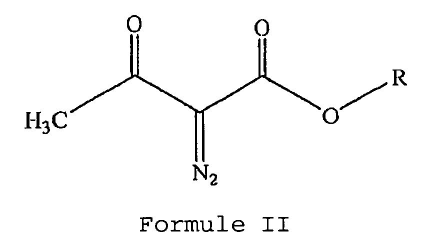 avec de l'iodotriméthylsilane en présence d'une base organique, dans laquelle l'iodotriméthylsilane est préparé en faisant réagir de l'hexaméthyldisilane avec de l'iode, pour former un silylénoléther de formule I par le procédé selon la revendication 1 : 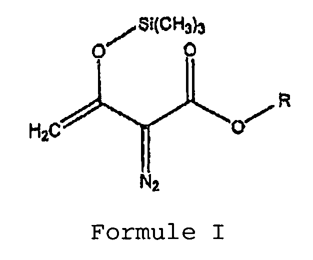
b. la réaction du silylénoléther de formule I avec une azétidinone de formule IV : 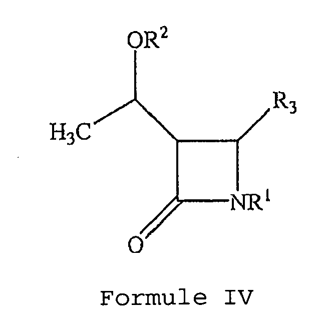 pour former une diazoazétidinone substituée de formule III : 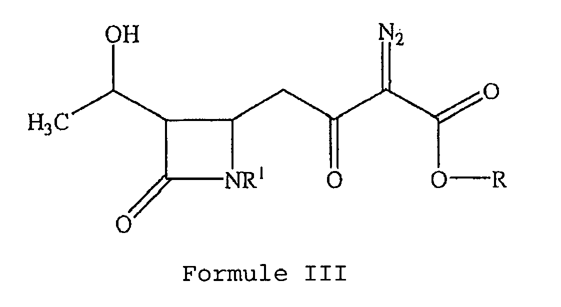
c. la cyclisation de la diazoazétidinone substituée de formule III en bicyclocétoester de formule V en présence d'un catalyseur,
dans lesquelles R représente un atome d'hydrogène, un alkyle en C₁-C₆, un alcényle en C₂-C₆, un phényle substitué ou non substitué, un benzhydryle, un triphénylméthyle ou un benzyle substitué ou non substitué ; R¹ représente de l'hydrogène ou un groupe protecteur de l'azote ; R² est un groupement trialkylsilyle ; et R³ est un groupement partant, et
d. la conversion du composé de formule V en composé antibiotique de carbapénème.

21. Procédé selon la revendication 20, dans lequel la conversion du composé de formule V en composé antibiotique de carbapénème comprend :
a. l'acylation de la fonctionnalité cétoester du composé de formule V avec un agent d'acylation ;
b. le traitement du composé acylé provenant de l'étape a avec un réactif de mercaptan de formule HSCH₂CH₂NHR⁸ [dans laquelle R⁸ est choisi parmi un atome d'hydrogène, un groupement de protection (choisi parmi le p-nitrobenzoxycarbonyle, l'o-nitro-benzoxycarbonyle, le phénylacétyle, le phénoxy-acétyle ou le triméthylsilyle), ou -CH=R⁹, (dans laquelle R⁹ est un groupement de protection choisi parmi le p-nitrobenzoxycarbonyl, l'o-nitro-benzoxycarboxyle, le phénylacétyle, le phénoxy-acétyle ou le triméthylsilyle)] ; et
c. le déblocage du composé provenant de l'étape b par hydrolyse ou par hydrogénation afin de former un composé antibiotique de carbapénème.

22. Procédé selon la revendication 21, dans lequel la conversion du composé de formule V en composé antibiotique de carbapénème comprend :
a. la phosphorylation de la fonctionnalité cétoester du composé de formule V avec un phosphoro-halogénurate afin de former un énolphosphate ; et
b. la réaction de l'énolphosphate avec une thioalkylamine de formule HS(CH₂)₂NH₂ ou un de ses sels d'addition acide afin de former un composé antibiotique de carbapénème.
